# EUROPEAN PATENT APPLICATION

(11) **EP 1 321 447 A1**
(43) Date of publication of application: **25.06.2003**
(21) Application number: 01130698.2
(22) Date of filing: 21.12.2001
(51) Int. Cl.: C04B 40/00, A61K 6/06, A61C 19/00

(54) **Method and apparatus for moistening a raw material**

(71) Applicant: MTF MediTech Franken GmbH, 90542 Eckental (DE)
(72) Inventor: Iwatschenko, Peter, 91077 Meunkirchen (DE)
(74) Representative: von Hellfeld, Axel, Dr. Dipl.-Phys.

(57) **Abstract**

A method and an apparatus for moistening a dry raw material (26) for filling a dental cavity in order to generate a chemically bound ceramic dental filling, utilize a porous body (24) which serves to transfer liquid into the raw material.

## Description

The present invention is concerned with a method of moistening a dry raw material to generate a ceramic material and an apparatus for moistening such a raw material. The present invention is, in particular, suitable for moistening a dry raw material to generate a dental ceramic material which can be filled into a dental cavity. In the following, the invention is described with regard to such a dental application, however, the ceramic material generated in accordance with the present invention is suitable for other applications, e.g. in the electronic field or for other medical purposes, e.g. prosthetics etc.

Recently a chemically bound ceramic product was developed as a material for filling, in particular, dental cavities, see in particular WO 01/76534 A1 and WO 01/76535 A1 and Journal Of Materials Science 35 (2000) 5879-5883, J.LI and L.HERMANSSON, "High-Strength Aluminate Cement Produced By Cold Isostatic Pressing".

The present invention is based on the afore-mentioned prior art and this prior art is, in the following, assumed to be known to the skilled reader. In short, the new dental material is a chemically bonded ceramic material which is produced by reaction between a binding phase of one or more powdered binding agents and a liquid reacting with these bindings agents. A quantity of powder containing said binding phase is moistened (damped) with a liquid so that all powdered grains are brought into close contact with the liquid, whereupon the material is permitted to harden by reaction between said binding phase and the remaining liquid. The cited prior art also teaches to use one or more expansion-compensating additives, adapted to give the material dimensionally stable long-term properties. These additives are mixed into said powder prior to or in conjunction with the moistening by the liquid. The cited prior art also teaches many details of how said ceramic material is chemically composed and prepared and these teachings can be applied in connection with the present invention.

In the prior art, the dry raw material is moistened (wetted) by exposing the dry raw material directly to a liquid, e.g. by pipetting the liquid directly onto the dry raw material. Excessive liquid which is not absorbed by the raw material is removed, e.g. wiped off. This technique has the disadvantage that the moistening (wetting) of the raw material is very often not perfectly homogenous. The prior art technique of directly exposing the dry raw material to the liquid was in particular problematic with powdered raw material and, therefore, the dry raw material was used in a compact form, e.g. in form of a pill or tablet or the like. Nevertheless, the afore-mentioned difficulties to obtain a homogenous moistening of the raw material without excessive liquid was hard to overcome even when using a raw compact.

It is a goal of the present invention to improve the compactness and homogeneity of the final dental cavity filling. In particular, the formation of cracks and micro cavities within the dental filling shall be avoided or at least substantially reduced.

To this end, the present invention teaches a method of moistening a dry raw material comprising a binding phase of one or more powdered binding agents which, after said moistening with a liquid reacting with the binding agents, form first a formable material for filling a dental cavity and then a chemically bound ceramic material, wherein said moistening is performed by means of a porous body which is brought into contact with said raw material such that liquid is transferred from said porous body into said raw material.

The porous body functions as a dosing buffer with regard to the transfer of liquid into the dry raw material. The raw material can be powdered or in a compact form as described above, in both cases the use of a porous body for moistening the raw material improves the results with regard to the afore-mentioned criteria.

The porous body is, according to a preferred embodiment itself made from a ceramic material. Also other porous substrates are suitable, e.g. a porous body made from a resin. The porous body can be hard (like a ceramic) or also soft (like a sponge).

According to the present invention, also preferably the expansion-compensating additives described in the above cited prior art and adapted to give the material dimensionally stable long-term properties, are added to the raw material.

The raw material, in particular, when in compact form, is itself porous and absorbs the liquid primarely by capillary action. When applying the teaching of the present invention, best results have been obtained when said porous body has a larger porosity than the raw material, i.e. the average diameter of the capillary vessels of the porous body is larger than the average diameter of the capillary vessels within the raw material to be moistened.

According to a preferred embodiment of the present invention said porous body is a container adapted to receive the dry raw material. Such a container can then be immersed into a liquid and functions like a buffer when the liquid moves from the liquid container through the porous body into the raw material. An optimum time of immersion of the container filled with the raw material into the liquid tank can be determined experimentally and the user (dentist) is provided with appropriate information.

The present invention also teaches an apparatus for moistening a dry raw material comprising a binding phase of one or more powdered binding agents which, after said moistening with a liquid reacting with the binding agents, form first a formable material for filling a dental cavity and then a chemically bound ceramic material in the dental cavity, wherein said apparatus comprises a porous body which is adapted to engage the raw material such that a liquid in said porous body is transferred into said raw material. Preferred embodiments of that apparatus are mentioned above, e.g. the porous body of the apparatus can be a container adapted to receive the dry raw material. The porous body preferably has the above-stated features.

The present invention also teaches an apparatus for moistening a dry raw material comprising a binding phase of one or more powdered binding agents which, after said moistening with a liquid reacting with the binding agents, form first a formable material for filling a dental cavity and then a chemically bound ceramic material in the dental cavity, wherein said apparatus comprises a compartment to receive the raw material and a porous body.

According to a preferred embodiment of the afore-mentioned apparatus, the compartment comprises an exit arranged such that excessive liquid from the moistened material in the compartment drops out from the compartment. This embodiment of the invention can also be used without a porous body, i.e. the liquid can be applied directly onto the raw material if the raw material essentially fills up the compartment such that excessive liquid overflows directly from the compartment without solving the raw material. However, preferably, also this embodiment of the invention is used together with a porous body. The porous body is, preferably, positioned first in said compartment, i.e. underneath the raw material which is filled in on top of the porous body. Preferably, the porous body perfectly fits (matches) the compartment such that no excessive liquid is allowed to collect outside the porous body and the raw compact in the compartment.

Preferably, the porous body, in particular when in container-shape, has an open porosity of 20 to 50 % and pore sizes of 1 to 15 µm.

Details of the raw material are not repeated in this patent application. In this regard, in particular with regard to the chemical and physical properties of the raw material it is referred to the above-cited prior art literature (WO 01/76534 and WO 01/76535) and such disclosure is assumed to be known to the person skilled in the art in the following. This applies, in particular, to the composition of the powder mixture including additives (WO 01/76534, p. 4 to 9), as well as to the procedure of preparing the mixture (pages 9 to 11).

In the following, embodiments of the present invention are described in detail with reference to the drawings. In the drawings
figure 1 shows schematically a first embodiment of an apparatus for moistening a raw material and
figure 2 shows schematically a cross-section of another embodiment of an apparatus for moistening a raw material.

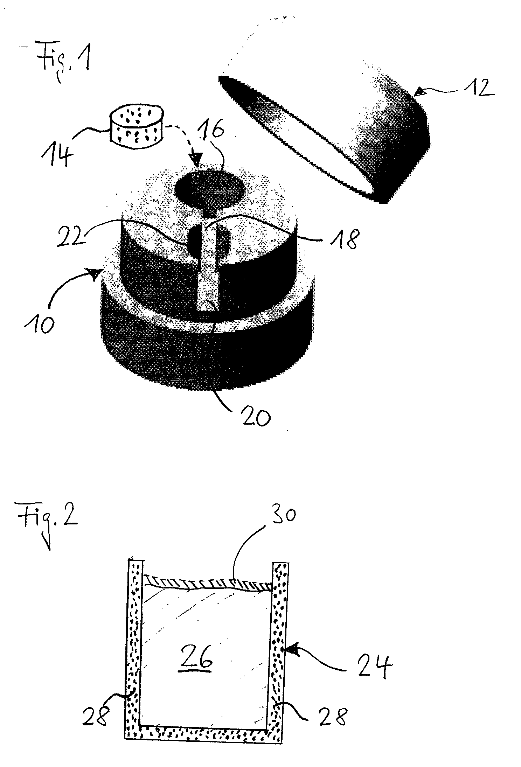

The apparatus 10 for moistening a dry raw material as shown in figure 1 comprises a solid body of a material suitable to receive a dry raw material in powdered form or in the form of a compacted pill or the like. The body of the apparatus 10 shown in figure 1 is non-porous, e.g. the material of the apparatus 10 can be a non-porous ceramic or a resin.

The body of the apparatus 10 comprises a first compartment 16 and a second compartment 22. Into first compartment 16 a porous body 14 is inserted. The diameter of cylindrical porous body 14 corresponds essentially to the diameter of cylindrical compartment 16. However, the height of porous body 14 is substantially smaller than the depth of the compartment 16 such that, when the body 14 is inserted into compartment 16, a non-filled space on top of body 14 remains in compartment 16 such that a dry raw material (powdered or in compact shape) can be filled on top of porous body 14 into compartment 16. Before porous body 14 is inserted into compartment 16 it is saturated with a liquid to be transferred into raw material (not shown in figure 1).

The apparatus 10 shown in figure 1 comprises a second compartment 22 arranged side-by-side with regard to the first compartment 16. Compartments 16 and 22 are connected by a slot 18 such that excessive liquid can drop out form compartment 16 into the second compartment 22. Slot 18 extends over the full depth of compartment 16. Compartment 18 is also in fluid communication to the outside by means of a slot-shaped opening 20.

The apparatus shown in figure 1 can be used in different ways. In addition to the use mentioned above, second compartment 22 can also be used as a reservoir for liquid which enters into porous body 14. Furthermore, the dimensions of the slot (opening 18) can be selected such that only a controlled amount of liquid is allowed to enter into the first compartment 16. The porous body can function as a buffer between the liquid reservoir and the raw material (not shown in figure 1).

A cap 12 closes compartments 16, 22 and may serve to exert pressure on the raw compact in compartment 16 such that contact and engagement between porous body 14 and the raw compact is enhanced.

Figure 2 shows another embodiment of an apparatus for moistening dry raw material. According to this embodiment, the porous body 24 itself forms a container for receiving dry raw material 26. The dry raw material may be in compact form or in powdered form. The container-shaped porous body 24 can be immersed into a liquid such that the liquid enters into the pores 28 in the body 24 and into the raw material 26 received in the container. The embodiment shown in figure 2 can be combined with a means for exerting pressure and shearing forces onto and into the moistened material inside the container. For example, a rotatable body can be mounted in the opening of the container by means of a thread and an opening (not shown) can be provided in the bottom of the container-shaped body 24. When the rotatable member is rotated, the thread causes movement of the rotatable member in longitudinal direction (in figure 2 form top to bottom) and the wetted material is mixed under pressure in order to enhance the homogeneity of the dental filling, both with regard to wetting and internal structure.

In order to examine whether or not the raw material is completely moistened, according to a preferred embodiment, a chemical substrate 30 is applied on top of the raw material. For example, said chemical substrate 30 can measure the pH value. If the raw material 26 is completely moistened, the liquid will come into contact with the substrate 30 and the substrate is such that the liquid causes a chemical reaction. For example, a well-known substrate measuring the pH-value is suitable since a liquid (e.g. water) having passed through the raw material in question here, comprises an alkaline pH-value. Therefore, a well-known litmus paper can be used for the substrate 30. Furthermore, the water causes an alkaline reaction resulting in calcium oxide which can also be detected chemically. As is shown in figure 2, the substrate 30 detecting chemically or physically the completeness of the moistening action is arranged at the raw material in a position where the liquid appears finally when the raw material is completely moistened. In the embodiment shown in figure 1, the porous body 14 is positioned in compartment 16 first, on top of porous body 14 the raw material is positioned and on top of the raw material a substrate 30 as described in connection with figures 2. When the cap 12 is secured on the apparatus, said cap 12 applies a pressure onto the substrate 30 so that the substrate 30 is in close contact with the raw material. If cap 12 is transparent, the user may observe the substrate 30 in order to determine whether or not the moistening is completed.

## Claims

1. Method of moistening a dry raw material comprising a binding phase of one or more powdered binding agents which, after said moistening with a liquid reacting with the binding agents, form first a formable material for filling a cavity and then a chemically bound ceramic material, **characterized in that** said moistening is performed by means of a porous body (14, 24) which is brought into contact with said raw material (26) such that liquid is transferred from said porous body into said raw material.

2. Method according to claim 1, wherein said raw material, before moistening it with said liquid, has a degree of compactness of 55-67 percent by volume solid phase.

3. Method according to one of the claims 1 or 2, wherein said body (14, 24) has a larger porosity than said raw material, in particular when said raw material is in a compacted state.

4. Method according to one of the preceding claims, **characterized in that** said body (24) is a container adapted to receive said raw material (26).

5. Method according to one of the preceding claims, **characterized in that** said raw material, before moistening it, is in a powdered state.

6. Method according to one of the claims 1 to 4, **characterized in that** said raw material, before moistening it with a liquid, is in a compacted state, in particular a pill.

7. Method according to one of the preceding claims, **characterized in that** the moistening of the material is examined by a chemical substrate applied to the raw material.

8. Apparatus for moistening a dry raw material comprising a binding phase of one or more powdered binding agents which, after said moistening with a liquid reacting with the binding agents, form first a formable material for filling a dental cavity and then a chemically bound ceramic material, **characterized in that** said apparatus comprises a porous body (14, 24) which is adapted to engage the raw material such that a liquid in said porous body is transferred into said raw material.

9. Apparatus according to claim 8, **characterized in that** said body (14, 24) has a larger porosity than said raw material.

10. Apparatus according to one of the claims 8 or 9, **characterized in that** said body (24) is a container adapted to receive said raw material.

11. Apparatus for moistening a dry raw material comprising a binding phase of one or more powdered binding agents which, after said moistening with a liquid reacting with the binding agents, form first a formable material for filling a dental cavity and then a chemically bound ceramic material in the dental cavity, **characterized in that** said apparatus comprises a compartment (16) to receive the raw material and a porous body (14) to be positioned in said compartment.

12. Apparatus according to claim 11, **characterized in that** said compartment (16) comprises an exit (18) arranged such that excessive liquid from the moistened material in the compartment (16) drops out from the compartment (16).

13. Apparatus according to one of the claims 11 or 12, **characterized in that** said porous body (14) matches said compartment (16).
